(19) Europäisches Patentamt
European Patent Office
Office européen des brevets

(11) EP 3 124 516 A1

# (12) EUROPEAN PATENT APPLICATION

(43) Date of publication:
**01.02.2017 Bulletin 2017/05**

(21) Application number: **15178682.9**

(22) Date of filing: **28.07.2015**

(51) Int Cl.:
*C08G 18/76* (2006.01)
*C08G 18/00* (2006.01)
*C08G 18/32* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
- **Henkel AG & Co. KGaA**
  **40589 Düsseldorf (DE)**
- **Henkel IP & Holding GmbH**
  **40589 Düsseldorf (DE)**

(72) Inventors:
- **LOMBA HUGUET, Miguel**
  **50017 Zaragoza (ES)**
- **GARDUNO PÈREZ, Juan**
  **08041 Barcelona (ES)**
- **TORRES CANO, Elisabet**
  **08022 Barcelona (ES)**
- **SALHI, Fouad**
  **08193 Barcelona (ES)**
- **BASSAGANAS TURÓN, Sergi**
  **17800, Olot, Girona (ES)**
- **SAKALYTE, Asta**
  **43130 Tarragona (ES)**

## (54) ORGANIC AEROGELS BASED ON ISOCYANATE AND CYCLIC ETHER POLYMER NETWORKS

(57) The present invention relates to an organic aerogel obtained by reacting an isocyanate compound having a functionality equal or greater than 2 and a cyclic ether compound having a functionality equal or greater than 2 in a presence of a solvent. An organic aerogel according to the present invention provides good thermal insulation and good mechanical properties.

EP 3 124 516 A1

## Description

### Technical field

The present invention relates to an organic aerogel obtained by reacting an isocyanate compound having a functionality equal or greater than 2 and a cyclic ether compound having a functionality equal or greater than 2 in a presence of a solvent. An organic aerogel according to the present invention provides good thermal insulation and good mechanical properties.

### Background of the invention

Aerogels are three-dimensional, low-density assemblies of nanoparticles derived from drying wet-gels by exchanging the pore-filling solvent to a gas, usually with a supercritical fluid. By these means, the capillary forces exerted by the solvent due to evaporation are minimized, and structures with large internal void space are achieved. The high porosity of these materials is reason for their very low thermal conductivity, which makes aerogels extremely attractive materials for thermal insulating applications.

Compared to common thermal insulators in the market, aerogels are lightweight materials with a very low thermal conductivity. Therefore, aerogels are known for being good insulating materials due to their nanostructure and the elimination of any contribution from the gas phase. Thus, thickness of the insulating layer can be reduced while obtaining similar insulating properties. Aerogels are environmentally friendly because they are air filled, and furthermore, they are not subject to ageing.

Thermal insulation is important in many different applications in order to save energy and reduce costs. Examples of such applications are construction, transport and industry. For some applications, it is possible to use a thick insulating panel to reduce the heat transfer. However, other applications may require thinner insulating panels/layers because of size limitations. For the thin insulating panels/layers the thermal conductivity of the material has to be extremely low in order to get the same insulating properties than with thicker insulating panels/layers. Additionally, in some cases and depending on the application, high mechanical properties may also be required.

Most of known aerogels are inorganic aerogels, mainly based on silica. Despite of their high thermal insulating properties, a slow commercialization is observed due to their fragility and poor mechanical properties. Their low mechanical properties are generally attributed to the well-defined narrow antiparticle necks. This fragility may be overcame by different methods. For example, by cross-linking aerogels with organic polymers or by post-gelation casting of a thin conformal polymer coating over the entire internal porous surface of the preformed wet-gel nanostructure.

On the other hand, different organic aerogels have also been described in the literature. These materials are generally based on polymeric networks of different nature, formed by cross-linking of monomers in a solution to yield a gel that is subsequently dried to obtain a porous material.

First organic aerogels described in the literature were based on phenol-formaldehyde resins, which can also be used to prepare carbon aerogels by pyrolysis. Other significant organic aerogels are based on materials prepared using multifunctional isocyanates. These monomers can be used to prepare polyimide aerogels (by reaction with anhydrides), polyamide aerogels (by reaction with carboxylic acids), polyurethane aerogels (by reaction with hydroxylated compounds), polycarbodiimide aerogels or polyurea aerogels (by reaction with aminated compounds or with water as catalyst).

Inorganic aerogels, such as silica based aerogels, represent the most traditional type and offer the best thermal insulating performance. However, these materials are brittle, dusty and easy air-borne, and therefore cannot withstand mechanical stress. Because of that, sometimes they are classified as hazardous materials. In addition, due to their brittleness, they are not suitable for some applications where mechanical properties are required.

On the other hand, organic aerogels are robust and mechanically stable, which is an advantage for many applications. However, some of these materials can also have drawbacks.

Different polymeric networks have been described for the preparation of organic aerogels. Aerogel based on resorcinol-formaldehyde networks are brittle and their curing process takes a long time (up to 5 days), which results a drawback for an industrial scale production. On the other hand, organic aerogels based on isocyanate groups have faster curing process and their mechanical properties can be modified depending on the reacting functional group with the isocyanate moiety, as well as the monomer and/or oligomer chemical structure (i.e. number of functionalities, aromatic of aliphatic nature, steric hindrance, etc.).

Prior art discloses a wide variety of aerogels based on isocyanate chemistry. Isocyanate moieties have been reacted with hydroxylated compounds to obtain polyurethane aerogels; with amines or water to obtain polyurea aerogels; with anhydrides to obtain polyimide aerogels; and with carboxylic acids to obtain polyamide aerogels. In most of the cases, multifunctional monomers must be used to increase the cross-linking degree, which usually results in higher mechanical properties. The trimerization of isocyanate groups to form polymeric isocyanurate networks has also been

described.

Polyisocyanate based rigid foams, such as polyurethane and polyisocyanurate foams are known in the art and are used as a thermal insulation medium for example in the construction of refrigerated storage devices. These foams are in general prepared in the presence of a blowing agent. The thermal insulating properties of rigid foams depend on a number of factors including, the cell size and the thermal conductivity of the cell content (i.e. of the blowing agents used in the preparation of the foams). The most common blowing agents are hydrochlorofluorocarbons, hydrofluorocarbons and cycloalkenes. Even though these blowing agents are more acceptable than chlorofluorocarbons, they provide inferior thermal insulation.

Polyurea aerogels based on isocyanates and amines are not satisfactory for all applications because of their mechanical stability and/or their compressive strength, as well as the thermal conductivity. In addition, the gelling time is often too long. Furthermore, the prior art states the presence of mixing defects associated with this kind of materials, as a result of the high reaction rate between isocyanates and amino groups. This leads to aerogels having heterogeneous and unsatisfactory properties.

Polyurethane aerogels obtained by reaction of oligomeric isocyanates and high molecular weight polyols have some advantages in terms of availability and cost, however, from an aerogel perspective, they have some disadvantages. Given the importance of the relative solubility suggested in the literature, phase-separation will be delayed due to the overall increased solubility of the products over the reagents, yielding larger colloidal particles. Consequently, surface-to-volume ratios are expected to be relatively low, resulting in low surface area materials. In general, oligomeric starting materials should yield low functional group densities on the surface of the nanoparticles, thus interparticle cross-linking should also be compromised, and the resulting aerogels are expected to be mechanically weak. Therefore, there is still a need for organic aerogels, which are providing good thermal insulation properties, while being mechanically robust.

### Summary of the invention

The present invention relates to an organic aerogel obtained by reacting an isocyanate compound having a functionality equal or greater than 2 and a cyclic ether compound having a functionality equal or greater than 2 in a presence of a solvent.

The present invention also relates to a method for preparing an organic aerogel according to the present invention comprising the steps of: 1) dissolving a cyclic ether compound into a solvent and adding an isocyanate compound and mixing; 2) adding a catalyst, if present, and mixing; 3) letting the mixture to stand in order to form a gel; 4) washing said gel with a solvent; and 5) drying said gel by either supercritical or ambient drying.

The present invention also encompasses a thermal insulating material or an acoustic material comprising an organic aerogel according to the present invention.

In addition, the present invention encompasses, use of an organic aerogel according to the present invention as a thermal insulating material or acoustic material.

### Detailed description of the invention

In the following passages the present invention is described in more detail. Each aspect so described may be combined with any other aspect or aspects unless clearly indicated to the contrary. In particular, any feature indicated as being preferred or advantageous may be combined with any other feature or features indicated as being preferred or advantageous.

In the context of the present invention, the terms used are to be construed in accordance with the following definitions, unless a context dictates otherwise.

As used herein, the singular forms "a", "an" and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical end points includes all numbers and fractions subsumed within the respective ranges, as well as the recited end points.

All percentages, parts, proportions and then like mentioned herein are based on weight unless otherwise indicated.

When an amount, a concentration or other values or parameters is/are expressed in form of a range, a preferable range, or a preferable upper limit value and a preferable lower limit value, it should be understood as that any ranges obtained by combining any upper limit or preferable value with any lower limit or preferable value are specifically disclosed, without considering whether the obtained ranges are clearly mentioned in the context.

All references cited in the present specification are hereby incorporated by reference in their entirety.

Unless otherwise defined, all terms used in disclosing the invention, including technical and scientific terms, have the meaning as commonly understood by one of the ordinary skill in the art to which this invention belongs to. By means of further guidance, term definitions are included to better appreciate the teaching of the present invention.

The present invention relates the development of novel organic aerogels based on a new polymeric network formed by reaction of monomers and/or oligomers of isocyanate and cyclic ether groups in the presence of a solvent and with or without a catalyst. These groups can react each other by different mechanisms to obtain a highly cross-linked polymeric network, which gels in presence of a solvent. After drying in supercritical or ambient conditions, lightweight aerogels are obtained with pore sizes in the range of tens to hundreds of nanometres. Very low thermal conductivity values are shown in combination with high mechanical properties, which represents the most difficult property to obtain in highly porous materials.

The present invention relates to the organic aerogel obtained by reacting an isocyanate compound having a functionality equal or greater than 2 and a cyclic ether compound having a functionality equal or greater than 2 in a presence of a solvent.

By the term 'aerogel' is meant herein a synthetic porous, low-density material derived from a gel, in which a gas has replaced the liquid component of the gel. Due to their porosity and density, these materials generally present low thermal conductivity.

By the term 'gel' is meant herein is a solid, jelly-like soft material, having a substantially dilute cross-linked system, which exhibits no flow when in the steady state.

The reaction of isocyanate with cyclic ether groups, allows preparing a hybrid polymeric network with a high cross-linking degree because of the polymerization mechanism of cyclic ether resins. The high cross-linking degree results in lower pore size and better mechanical properties compared to the material having a lower cross-linking degree. Given the reactivity of these functional groups, the resulting aerogels may have different connectivity.

Main reactions between isocyanate and epoxides are illustrated in scheme 1, as representative examples. Urea (1) is formed in reaction between isocyanate and water. Urethane (2) is obtained in reaction between isocyanate and alkoxide after epoxide ring opening. Trimerization of isocyanate leads to formation of isocyanurate (3). Oxazolidone (4) is obtained from the reaction between isocyanate and epoxy at high temperatures.

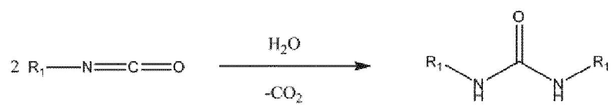


(1)

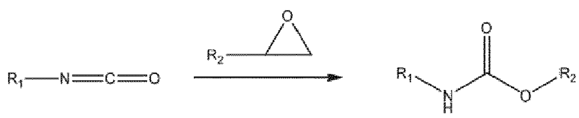

(2)

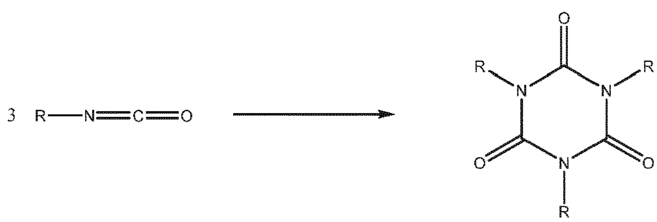

(3)

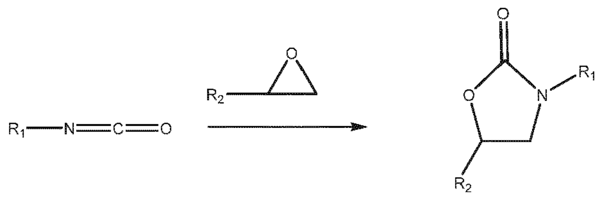

(4)

*Scheme 1*

Therefore, the resulting nanoporous network may include polyurethane (2), polyisocyanurate (3) and polyoxazolidone (4), as well as polyurea (1) in a lesser extent. Organic aerogels according to the present invention have high cross-linking degree, lower pore size and better mechanical properties than less cross-linked aerogels.

In one embodiment, an organic aerogel according to the present invention is obtained by reacting an isocyanate compound having a functionality equal or greater than 2 and a cyclic ether compound having a functionality equal or greater than 2 in a presence of a solvent.

In another embodiment, an organic aerogel according to the present invention is obtained reacting an isocyanate compound having a functionality equal or greater than 2 and a cyclic ether compound having a functionality equal or greater than 2 in a presence of a solvent and a catalyst.

Suitable isocyanate compound for use in the present invention has a functionality equal or greater than 2. Preferably, said isocyanate compound has a functionality from 2 to 6, and more preferably functionality from 2 to 3. By the term 'functionality' is meant herein number of isocyanate groups in the compound.

Suitable isocyanate compound for use in the present invention is an aromatic isocyanate compound or an aliphatic isocyanate compound.

Examples of suitable aliphatic isocyanate compounds (5) - (8) are:

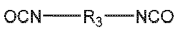 (5)

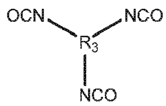 (6)

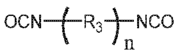 (7)

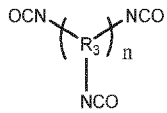 (8)

wherein $R_3$ is selected from the group consisting of a single bonded O, S, CO, $SO_2$, $O_3P{=}S$, a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group and a combination of thereof; and integer n is 1 to 30.

Examples of suitable aromatic isocyanate compounds (9) - (12) are:

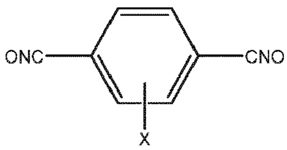

(9)

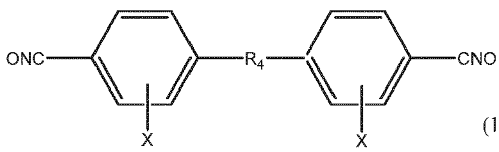

(10)

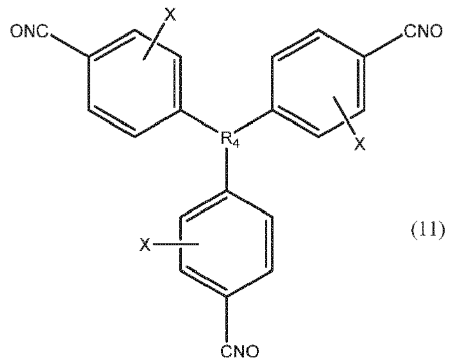

(11)

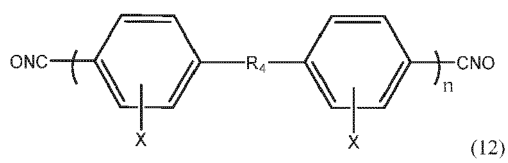

(12)

wherein X represents a substituent, or different substituents and are selected independently from the group consisting of hydrogen, halogen and linear or branched C1-C6 alkyl groups, attached on their respective phenyl ring at the 2-position, 3-position or 4-position, and their respective isomers, and

$R_4$ is selected from the group consisting of a single bonded O, S, CO, $SO_2$, $O_3P$=S, a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3 to C30 heterocycloalkyl group and a substituted or unsubstituted C1-C30 heteroalkyl group from and a combination of thereof; and integer n is 1 to 30.

Suitable commercially available isocyanates for use in the present invention are for example Desmodur RE, Desmodur L75, Desmodur N3300, Desmodur N3200 and Desmodur RFE all available from Bayer.

Preferably, the isocyanate compound is present in the reaction mixture from 0.5 to 25% by weight of the total weight of the reaction mixture (including solvent), more preferably from 2 to 20%.

Suitable cyclic ether compound for use in the present invention has a functionality equal or greater than 2. Preferably said cyclic ether compound has a functionality from 2 to 6, and more preferably from 2 to 4. By the term 'functionality' is meant herein number of cyclic ether groups in the compound.

Preferably, the cyclic ether compound is present in the reaction mixture from 0.5 to 25% by weight of the total weight of the reaction mixture (including solvent), more preferably from 2 to 20%.

Preferably, a cyclic ether compound for use in the present invention is an epoxy compound or an oxetane compound.

Examples of suitable epoxy compounds (13) - (19) are:

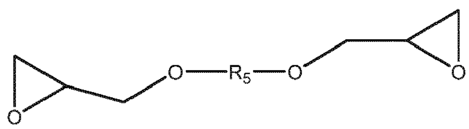

(13)

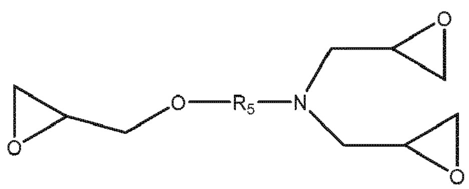

(14)

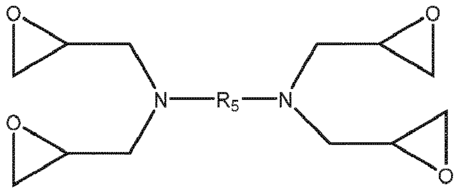
(15)

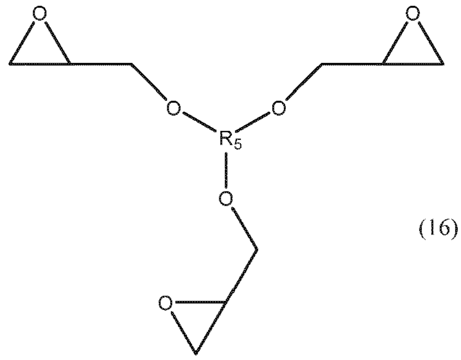
(16)

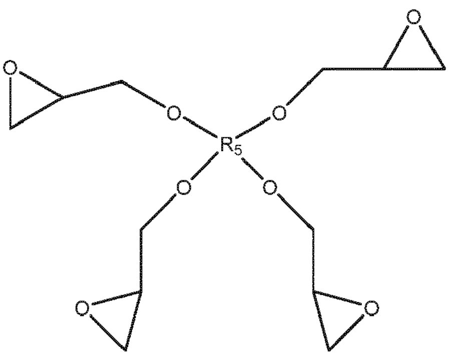
(17)

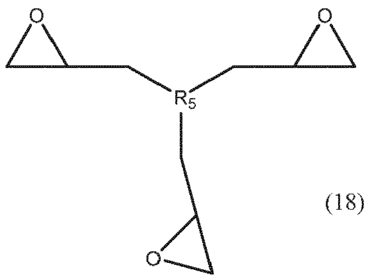
(18)

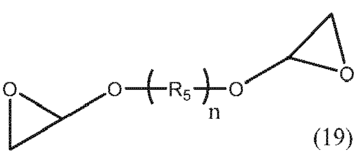
(19)

wherein $R_5$ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and n is integer 1 to 30.

Suitable commercially available epoxy compounds for use in the present invention are for example Araldite MY0510 and Tactix 123 from Huntsman, Erisys GE-60 and Erisys GE-35 from CVC Thermoset Specialties.

Preferably, the epoxy compound is present in the reaction mixture from 0.5 to 25% by weight of the total weight of the reaction mixture (including solvent), more preferably from 2 to 20%.

Examples of suitable oxetane compounds (20) - (24) are:

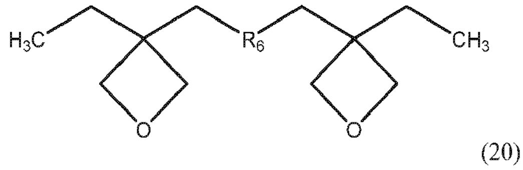

(20)

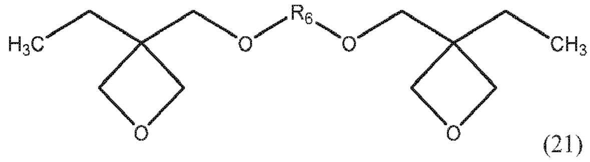

(21)

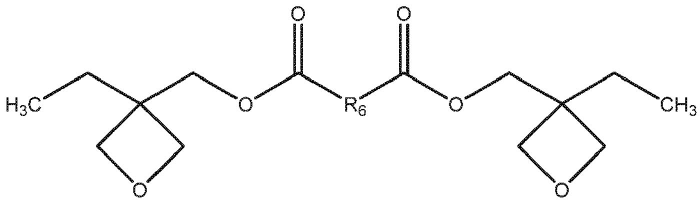

(22)

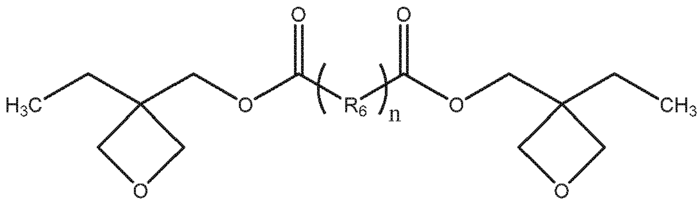

(23)

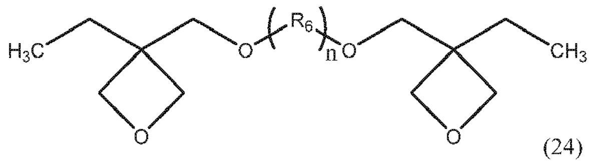

(24)

wherein $R_6$ is selected from the group consisting of a substituted or unsubstituted C1-C30 alkyl group, a substituted or unsubstituted C3-C30 cycloalkyl group, a substituted or unsubstituted aryl group, a substituted or unsubstituted C7-C30 alkylaryl group, a substituted or unsubstituted C3-C30 heterocycloalkyl group and a substituted or unsubstituted C1-C30 heteroalkyl group; and n is integer 1 to 30.

Suitable commercially available oxetane compounds for use in the present invention are for example Aron oxetane OXT-121 and Aron oxetane OXTP from Toagosei America INC.

Preferably, the oxetane compound is present in the reaction mixture from 0.5 to 25% by weight of the total weight of the reaction mixture (including solvent), more preferably from 2 to 20%.

An organic aerogel according to the present invention is obtained in a presence of a solvent.

Suitable solvent for use in the present invention is a polar solvent, preferably polar aprotic solvent.

Polar aprotic solvents are preferred because they do not have hydrogen atoms that can be donated into an H-bond. Therefore, anions participating in the nucleophilic addition reaction are not solvate, and they are not inhibited to react.

Examples of suitable solvents for use in the present invention are dimethylacetamide (DMAc), dimethylformamide (DMF), tetrahydrofuran (THF), 1-methyl-2-pyrrolidinone (NMP), dimethyl sulfoxide (DMSO), acetonitrile, ethyl acetate, acetone, methyl ethyl ketone (MEK), methyl isobutyl ketone (MIBK) and mixtures thereof.

In one highly preferred embodiment, an organic aerogel according to the present invention is obtained by

reacting an isocyanate compound having a functionality equal or greater than 2 and a cyclic ether compound having a functionality equal or greater than 2 in a presence of a solvent and a catalyst.

Suitable catalyst for use in the present invention is selected from the group consisting of alkyl amines, aromatic amines, imidazole derivatives, aza compounds, guanidine derivatives and amidines.

Suitable catalyst may be selected from the group consisting of triethylamine, trimethylamine, benzyldimethylamine (DMBA), *N*,*N*-dimethyl-1-phenylmethanamine, 1,4-diazabicyclo[2.2.2]octane, 2-ethyl-4-methylimidazole, 2-phenylimidazole, 2-methylimidazole, 1-methylimidazole, 4,4'-methylene-bis(2-ethyl-5-methylimidazole), 3,4,6,7,8,9-hexahydro-2*H*-pyrimido[1,2-a]pyrimidine, 2,3,4,6,7,8,9,10-octahydropyrimido [1,2-a]azepine, 1,8-diazabicyclo[5.4.0]undec-7-ene (DBU), 1,5,7-triazabicyclo[4.4.0]dec-5-ene (TBD), 1,4-diazabicyclo[2.2.2]octane, 1,5-diazabicyclo[4.3.0]non-5-ene, quinuclidine and mixtures thereof.

Preferably said catalyst is selected from the group consisting of benzyldimethylamine (DMBA), 1,5,7-triazabicyclo[4.4.0]dec-5-ene (TBD), 1,8-diazabicyclo[5.4.0]undec-7-ene (DBU), 1,4-diazabicyclo[2.2.2]octane, triethylamine.

Above-mentioned preferred catalysts are preferred because they provide faster gelation, and require lower temperature for it.

The catalyst is added from 0 to 10 parts per hundred parts of the reaction mixture (phr), including solvent, preferably from 2.5 to 10 phr.

A range from 2.5 to 10 phr is preferred, because aerogel performances reach a plateau around 7 phr of a catalyst and higher catalyst content would not improve any properties above this point.

An organic aerogel according to the present invention may further comprise organic, inorganic or combination of organic and inorganic fillers and fibres.

High epoxy content provides a low thermal conductivity; on the other hand, high isocyanate content provides better mechanical properties. The Applicant has surprisingly found out that low thermal conductivity and good mechanical properties can be provided when a ratio of epoxy/oxetane groups to isocyanate groups is 18:1 - 1:15. Preferably, an organic aerogel according to the present invention has a ratio of epoxy/oxetane groups to isocyanate groups is 18:1 - 1:15, more preferably 5:1 - 1:5.

An organic aerogel according to the present invention has a solid content from 3 to 30%, based on initial solid content of the solution, preferably from 5 to 20%.

Solid content in the range from 5 to 20% is preferred, because it provides a good compromise between thermal insulating properties and mechanical properties. High solid content provides high mechanical properties; however, high solid content provides poor thermal insulating properties. On the other hand, low solid content provides lower thermal conductivities, but mechanical properties are not ideal.

An organic aerogel according to the present invention has a thermal conductivity less than 55 mW/m·K, preferably less than 50 mW/m·K, more preferably less than 45 mW/m·K. Wherein the thermal conductivity is measured according to the test methods described below.

*Diffusivity sensor method*

In this method, the thermal conductivity is measured by using a diffusivity sensor. In this method, the heat source and the measuring sensor are on the same side of the device. The sensors measure the heat that diffuses from the sensor throughout the materials. This method is appropriate for lab scale tests.

*Steady-state condition system method*

In this method the thermal conductivity is measured by using a steady-state condition system. In this method, the sample is sandwiched between a heat source and a heat sink. The temperature is risen on one side, the heat flows through the material and once the temperature on the other side is constant, both heat flux and difference of temperatures are known, and thermal conductivity can be measured.

For the preparation of organic aerogels according to the present invention, several aspects have to be taken into consideration. The stoichiometric ratio of functionalities, the initial solid content, the amount and type of catalyst (if present), type of solvent, gelation time and temperature are important factors that affect to the final properties of the material. The difficulty in controlling the synthesis of this kind of polymers to obtain materials with the best combination of properties lies in the competition among the diversity of possible reactions (scheme 1) that may take place in an isocyanate-cyclic ether based blend.

In one embodiment, an organic aerogel according to the present invention is prepared according to a method comprising the steps of:

1) dissolving a cyclic ether compound into a solvent and adding an isocyanate compound and mixing,

2) adding a catalyst, if present, and mixing;

3) letting the mixture to stand in order to form a gel;

4) washing said gel with a solvent; and

5) drying said gel by supercritical drying or ambient drying.

The reaction mixture is prepared in a closed container.

Gelation step (3) is carried out in the oven for the pre-set time and temperature. Preferably, temperature is applied on step 3, more preferably, temperature from room temperature to 180 °C is applied while gel is forming, and most preferably, temperature from room temperature to 150 °C is applied.

Temperatures from room temperature to 180°C are preferred because of higher temperatures than 180 °C require the use of solvents with extremely high boiling points.

Gelation time is preferably from 1 to 24 hours, preferably from 1 to 15 hours and more preferably from 1 to 5 hours.

Washing time is preferably from 18 hours to 72 hours, preferably from 24 hours to 48 hours.

The solvent of wet gels of step 3) is changed one or more times after the gelation. The washing steps are done gradually, and if required, to the preferred solvent for the drying process. Once the wet gel remains in the proper solvent, it is dried in supercritical ($CO_2$) or ambient conditions obtaining the final aerogel material.

In one embodiment, the washing steps are done gradually as follows 1) DMAc/acetone 3:1; 2) DMAc/acetone 1:1; 3) DMAc/acetone 1:3; and 4) acetone. In another embodiment, all four washing steps are done with acetone. Once the solvent has been completely replaced by acetone, gel is dried in supercritical ($CO_2$) or ambient conditions obtaining the final aerogel material.

The supercritical state of a substance is reached once its liquid and gaseous phases become indistinguishable. The pressure and temperature at which the substance enters this phase is called critical point. In this phase, the fluid presents the low viscosity of a gas, maintaining the higher density of a liquid. It can effuse through solids like a gas and dissolve materials like a liquid. Considering an aerogel, once the liquid inside the wet gel pores reaches the supercritical phase, its molecules do not possess enough intermolecular forces to create the necessary surface tension that creates capillarity stress. Hence, the solvent can be dried, minimizing shrinkage and possible collapse of the gel network.

The drying process at supercritical conditions is performed by exchanging the solvent in the gel with $CO_2$ or other suitable solvents in their supercritical state. Due to this, capillary forces exerted by the solvent during evaporation in the nanometric pores are minimized and shrinkage of the gel body can be reduced.

Alternatively, wet gels can be dried at ambient conditions, in which the solvent is evaporated at room temperature. However, as the liquid evaporates from the pores, it can create a meniscus that recedes back into the gel due to the difference between interfacial energies. This may create a capillary stress on the gel, which responds by shrinking. If these forces are higher enough, they can even lead to the collapse or cracking of the whole structure. However, there are different possibilities to minimize this phenomenon. One practical solution involves the use of solvents with low surface tension to minimize the interfacial energy between the liquid and the pore. Unfortunately, not all the solvents lead to gelation, which means that some cases would require the exchange of solvent between an initial one required for the gel formation and a second one most appropriate for the drying process. Hexane is usually used as a convenient solvent for ambient drying, as its surface tension is one of the lowest among the conventional solvents.

The organic aerogels according to the present invention can be reinforced by suitable fibre or filler compositions (either natural or synthetic), which may be based on organic, inorganic or both compounds.

One embodiment encompasses a thermal insulating material or an acoustic material comprising an organic aerogel according to the present invention.

The present invention also encompasses a use of an organic aerogel according to the present invention as a thermal insulating material or acoustic material.

Organic aerogels according to the present invention can be used for thermal insulation in different applications such as aircrafts, space crafts, pipelines, tankers and maritime ships replacing currently used foam panels and other foam products, in car battery housings and under hood liners, lamps, in cold packaging technology including tanks and boxes, jackets and footwear and tents.

Organic aerogels according to the present invention can also be used in construction materials due to their lightweight, strength, ability to be formed into desired shapes and superior thermal insulation properties.

Organic aerogels according to the present invention can be also used for storage of cryogens.

Organic aerogels according to the present invention can be also used as an adsorption agent for oil spill clean-up, due to their high oil absorption rate.

Organic aerogels according to the present invention can be also used in safety and protective equipment as a shock-absorbing medium.

## *Examples*

*Example 1*

Isocyanate/Epoxy aerogels were prepared from monomers methylidynetri-p-phenylene triisocyanate (Desmodur RE) from Bayer, and N,N-Diglycidyl-4-glycidyloxyaniline (Araldite MY0510) from Huntsman.

1.02 g (3.68 mmol) of Araldite MY0510 were placed to a container with 15.06 ml of *N*,*N*-Dimethylacetamide (DMAc) stirring at 300 rpm. The resulting slurry was stirred at 300 rpm for 5 minutes at room temperature (20 °C). Subsequently, Desmodur RE was added in an equivalent ratio 1:1 respect to the epoxy. To do that, 4.94 ml (3.68 mmol) of Desmodur RE solution were added while continuing stirring at 300 rpm. Subsequently, 0.62 ml (4.16 mmol) of *N*,*N*-Dimethylbenzylamine (DMBA) were added while stirring were continued at 300rpm. Final solid content of the solution was approximately 10 wt%. The reaction mixture was poured into sealed molds and heated up at 80°C for 180 min in an oven. A brown gel was obtained.

The resulting gel was washed stepwise in a mixture of Acetone 1:3 DMAc, Acetone 1:1 DMAc, Acetone 3:1 DMAc and Acetone, duration of each step was 24h, and using solvent three times the volume of the gel for each step.

Subsequently, obtained material was dried by supercritical drying with supercritical carbon dioxide.

Thermal conductivity was measured with a heat diffusivity sensor according to the test method described in the description.

Compression Young Modulus was measured with an Instron 3366 (ASTM D1621).

Leventis polyurethane used in the examples were produced in house, according to description in US20140147607 A1 page 20, paragraph [0162].

The results are summarised in table 1.

Table 1.

| ***Aerogel*** | ***Density ($g/cm^3$)*** | ***Initial solid content (wt%)*** | ***Thermal conductivity (mW/m·K)*** | ***Compression Young Modulus (MPa)*** |
|---|---|---|---|---|
| *Benchmarking aerogel - prepared according to* US20140147607 A1 page 20, [0162] | 0.159 | 10 | 41 | 0.57 |
| Isocyanate/Epoxy aerogel according to example 1 | 0.204 | 10 | 41 | 6.48 |

Isocyanate/Epoxy aerogel according to the present invention has better mechanical properties in comparison to some aerogels described in the literature.

*Example 2*

Isocyanate/Epoxy aerogels were prepared from monomers methylidynetri-p-phenylene triisocyanate (Desmodur RE) from Bayer and poly(ethylene glycol) diglycidyl ether (PEG-DGE) from Sigma-Aldrich.

4.77 g (9.54 mmol) of PEG-DGE were placed to a container with 51.46 ml of *N*,*N*-Dimethylacetamide (DMAc) stirring at 300 rpm. The resulting slurry was stirred at 300 rpm for 5 minutes at room temperature (20 °C). Subsequently, Desmodur RE was added in a equivalent ratio 1:1. To do that, 8.53 ml (6.27 mmol) of Desmodur RE solution were added while continuing stirring at 300 rpm. Subsequently, 1.06 ml (7.14 mmol) of *N*,*N*-Dimethylbenzylamine (DMBA) were added, while stirring were continued at 300rpm. Final solid content of the solution was approximately 10 wt%. The reaction mixture was poured into sealed molds and heated up at 80°C for 180 min in an oven. A brown gel was obtained.

The resulting gel was washed stepwise in a mixture of Acetone 1:3 DMAc, Acetone 1:1 DMAc, Acetone 3:1 DMAc and Acetone, duration of each step was 24h, and using solvent three times the volume of the gel for each step.

The material was dried by supercritical drying with supercritical carbon dioxide.

Compression Young Modulus was measured with an Instron 3366 (ASTM D1621).

The results are combined in table 2.

Table 2.

| *Aerogel* | *Density ($g/cm^3$)* | *Initial solid content (wt%)* | *Thermal conductivity (mW/m·K)* | *Compression Young Modulus (MPa)* |
|---|---|---|---|---|
| Benchmarking aerogel - prepared according to US20140147607 A1 page 20, [0162] | 0.159 | 10 | 41 | 0.57 |
| Isocyanate/Epoxy aerogel according to the example 2 | 0.180 | 10 | 38 | 2.66 |

Isocyanate/Epoxy aerogel according to the present invention has better thermal conductivity in comparison to aerogels described in the literature.

*Example 3*

Isocyanate/Epoxy aerogels were prepared from monomers methylidynetri-p-phenylene triisocyanate (Desmodur RE), from Bayer, and Erisys GE 60 from CVC Thermoset resins.

4.83 g (4.83 mmol) of Erisys GE60 were placed to a container with 52 ml of *N*,*N*-Dimethylacetamide (DMAc) stirring at 300 rpm. The resulting slurry was stirred at 300 rpm for 5 minutes at room temperature (20 °C). Subsequently, Desmodur RE was added in a 1:1.5 isocyanate/epoxy equivalent ratio. To do that, 8.33 ml (6.21 mmol) of Desmodur RE solution were added while stirring were continued at 300 rpm. Subsequently, 1.03 ml (6.94 mmol) of N,N-Dimethylbenzylamine (DMBA) were added stirring were continued at 300rpm. Final solid content of the solution was approximately 10 wt%. The reaction mixture was poured into sealed molds and heated up at 80 °C for 180 min in an oven. A brown gel was obtained.

The resulting gel was washed stepwise in a mixture of Acetone 1:3 DMAc, Acetone 1:1 DMAc, Acetone 3:1 DMAc and Acetone, duration of each step was 24h, and using solvent three times the volume of the gel for each step.

The obtained material was dried by supercritical drying with supercritical carbon dioxide.

Table 3.

| *Aerogel* | *Density ($g/cm^3$)* | *Initial solid content (wt%)* | *Isocyanate/ epoxy ratio* | *Thermal conductivity* (mW/m·K)* | *Compression Young Modulus** (MPa)* |
|---|---|---|---|---|---|
| Isocyanate/Epoxy aerogel according to the example 3 | 0.435 | 10 | 1/3 | 49 | 10.50 |

*Example 4*

Isocyanate/Epoxy aerogels were prepared from monomers methylidynetri-p-phenylene triisocyanate (Desmodur RE), from Bayer Corporation, and poly(ethylene glycol) diglycidyl ether (PEG-DGE) from Sigma-Aldrich.

2.88 g (5.76 mmol) of PEG-DGE were placed to a container with 44 ml of *N*,*N*-Dimethylacetamide (DMAc) stirring at 300 rpm. The resulting slurry was stirred at 300 rpm for 5 minutes at room temperature (20 °C). Subsequently, Desmodur RE was added in a 3:1 isocyanate/epoxy equivalent ratio. To do that, 15.45 ml (11.52 mmol) of Desmodur RE solution were added while stirring were continued at 300 rpm. Subsequently, 1.38 ml (9.9 mmol) of triethylamine ($Et_3N$) were added while stirring were continued at 300rpm. Final solid content of the solution was approximately 10 wt%. The reaction mixture was poured into sealed molds and heated up at 120 °C for 60 min in an oven. A brown gel was obtained.

The resulting gel was washed stepwise in a mixture of acetone 1:3 DMAc, acetone 1:1 DMAc, acetone 3:1 DMAc and acetone, duration of each step was 24h, and using solvent three times the volume of the gel for each step.

*Example 5*

4.93 g (17.8 mmol) of Araldite MY0510 was placed to a container with 52 ml of *N*,*N*-dimethylacetamide (DMAc) while stirred at 300 rpm. The resulting slurry was stirred at 300 rpm for 5 minutes at room temperature (20 °C). Subsequently, Desmodur RE was added in a 1:3 isocyanate/epoxy equivalent ratio. 7.95 ml (5.91 mmol) of Desmodur RE

solution were added while stirring was continued at 300 rpm. Subsequently, 0.99 ml (6.67 mmol) of *N*,*N*-dimethylbenzylamine (DMBA) was added while stirring was continued at 300rpm. Final solid content of the solution was approximately 10 wt%. The reaction mixture was poured into sealed molds and heated up at 150 °C in an oven for 60 min. A brown gel was obtained.

The resulting gel was washed stepwise in a mixture of acetone 1:3 DMAc, acetone 1:1 DMAc, acetone 3:1 DMAc and acetone, duration of each step was 24 h, and solvent was used in three times the volume of the gel in each step.

The material was dried by supercritical drying with supercritical carbon dioxide.

Thermal conductivity was measured with a heat diffusivity sensor according to the method described in the description above.

Linear shrinkage can be defined as a decrease in a single dimension, calculated by the following equation:

$$Linear\ Shrinkage\ (\%) = \frac{Initial\ length - final\ length}{initial\ length} * 100$$

The results are combined in table 4.

Table 4.

| ***Aerogel*** | ***Density (g/cm³)*** | ***Linear shrinkage (%)*** | ***Thermal conductivity* (mW/m·K)*** |
|---|---|---|---|
| Isocyanate/Epoxy aerogel according to the example 4 | 0.157 | 3 | 37 |

The FTIR spectra of the aerogel prepared with Desmodur RE and Araldite MY0510 showed a band at 1750 $cm^{-1}$, due to the formation of oxazolidone rings. Neither urethane (1700 $cm^{-1}$) nor isocyanurate rings (1680 $cm^{-1}$) were formed at that temperature. FTIR spectra was obtained using FTIR Tensor 27 spectrophotometer from Bruker with an ATR Golden Gate accessory.

*Example 6*

4.77 g (9.54 mmol) of PEG-DGE were placed to a container with 51.46 ml of *N*,*N*-Dimethylacetamide (DMAc) stirring at 300 rpm. The resulting slurry was stirred at 300 rpm for 5 minutes at room temperature (20 °C). Subsequently, Desmodur RE was added in a equivalent ratio 1:1. To do that, 8.53 ml (6.27 mmol) of Desmodur RE solution were added while continuing stirring at 300 rpm. Final solid content of the solution was approximately 10wt%. The reaction mixture was poured into sealed molds and heated up at 80°C for 180 min in an oven. A brown gel was obtained.

The resulting gel was washed stepwise in a mixture of acetone 1:3 DMAc, acetone 1:1 DMAc, acetone 3:1 DMAc and acetone, duration of each step was 24 hours, and solvent was used three times the volume of the gel for each step.

The material was dried by supercritical drying with supercritical carbon dioxide.

The results are combined in table 5.

| ***Aerogel*** | ***Density (g/cm³)*** | ***Linear shrinkage*** (%) | ***Thermal conductivity* (mW/m·K)*** |
|---|---|---|---|
| Isocyanate/Epoxy aerogel according to the example 5 | 0.102 | 45 | 78 |

*Example 7*

1.20 g (3.3 mmol) of Aron oxetane OXTP were dissolved in 15.36 ml of *N*,*N*-dimethylacetamide (DMAc) at room temperature (20 °C) and 1 g (2.2 mmol) of Desmodur RE was added in a 3:2 isocyanate/oxetane equivalent ratio. Subsequently, 0.12 ml (0.79 mmol) of *N*,*N*-dimethylbenzylamine (DMBA) were added while stirring at 300rpm. Final solid content of the solution was approximately 10wt%. The reaction mixture was poured into sealed molds and heated up at 80°C in an oven for 300 min. A white gel was obtained.

The resulting gel was washed stepwise in a mixture of acetone 1:3 DMAc, acetone 1:1 DMAc, acetone 3:1 DMAc and acetone, duration of each step was 24 hours, and solvent was used three times the volume of the gel for

each step.

The material was dried by supercritical drying with supercritical carbon dioxide.

The results are combined in table 6.

Table 6.

| ***Aerogel*** | ***Density ($g/cm^3$)*** | ***Linear shrinkage (%)*** | ***Thermal conductivity* (mW/m·K)*** |
|---|---|---|---|
| Isocyanate/Oxetane aerogel according to the example 6 | 0.120 | 18 | 39 |

**Claims**

1. An organic aerogel obtained by reacting an isocyanate compound having a functionality equal or greater than 2 and a cyclic ether compound having a functionality equal or greater than 2 in a presence of a solvent.

2. An organic aerogel according to claim 1, wherein said an isocyanate compound and said cyclic ether compound are reacted in the presence of a catalyst.

3. An organic aerogel according to claim 1 or 2, wherein said isocyanate compound has a functionality from 2 to 6, preferably from 2 to 3.

4. An organic aerogel according to any of claims 1 to 3, wherein said cyclic ether compound has a functionality from 2 to 6, preferably from 2 to 4.

5. An organic aerogel according to the any of claims 1 to 4, wherein said isocyanate compound is an aromatic isocyanate compound or an aliphatic isocyanate compound.

6. An organic aerogel according to any of claims 1 to 5, wherein said cyclic ether compound is an epoxy compound or an oxetane compound.

7. An organic aerogel according to any of claims 1 to 6, wherein ratio of epoxy/oxetane groups to isocyanate groups is 18:1 - 1:15, preferably 5:1 - 1:5.

8. An organic aerogel according to the any of claims 1 to 7, wherein said solvent is a polar solvent, preferably polar aprotic solvent.

9. An organic aerogel according to the any of claims 1 to 8, wherein said catalyst is selected from the group consisting of alkyl amines, aromatic amines, imidazole derivatives, aza compounds, guanidine derivatives and amidines.

10. An organic aerogel according to the any of claims 1 to 9, wherein said organic aerogel has a solid content from 3 to 30%, based on initial solid content of the solution, preferably from 5 to 20%.

11. An organic aerogel according to the any of claims 1 to 10, wherein said organic aerogel has a thermal conductivity less than 55 mW/m·K, preferably less than 50 mW/m·K, more preferably less than 45 mW/m·K.

12. A method for preparing an organic aerogel according any of claims 1 to 11 comprising the steps of:

    1) dissolving a cyclic ether compound into a solvent and adding an isocyanate compound and mixing,
    2) adding a catalyst if present, and mixing;
    3) letting the mixture to stand in order to form a gel;
    4) washing said gel with a solvent; and
    5) drying said gel by supercritical or ambient drying.

13. A method according to claim 12, wherein temperature from room temperature to 180 °C is applied at step 3 to form a gel, preferably temperature from room temperature to 150 °C is applied.

**14.** A thermal insulating material or an acoustic material comprising an organic aerogel according any of claims 1 to 11.

**15.** Use of an organic aerogel according to the any of claims 1 to 11 as a thermal insulating material or acoustic material.

Europäisches Patentamt
European Patent Office
Office européen des brevets

# EUROPEAN SEARCH REPORT

Application Number
EP 15 17 8682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/44028 A1 (ICI PLC [GB]) 8 October 1998 (1998-10-08) * pages 1-3,7,8 * ----- | 1-15 | INV. C08G18/76 C08G18/00 C08G18/32 |
| X | US 2010/160472 A1 (LEE JE KYUN [US] ET AL) 24 June 2010 (2010-06-24) * paragraphs [0009] - [0012], [0040]; claims * ----- | 1,12,14, 15 | |
| A,D | US 2014/147607 A1 (LEVENTIS NICHOLAS [US] ET AL) 29 May 2014 (2014-05-29) * examples * ----- | 1-15 | |

| TECHNICAL FIELDS SEARCHED (IPC) |
|---|
| C08G |

The present search report has been drawn up for all claims

1

| Place of search | Date of completion of the search | Examiner |
|---|---|---|
| Munich | 5 November 2015 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 15 17 8682

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2015

| Patent document cited in search report | Publication date | Patent family member(s) | Publication date |
|---|---|---|---|
| WO 9844028 A1 | 08-10-1998 | EP 0971976 A1<br>WO 9844028 A1 | 19-01-2000<br>08-10-1998 |
| US 2010160472 A1 | 24-06-2010 | NONE | |
| US 2014147607 A1 | 29-05-2014 | US 2014147607 A1<br>US 2015267026 A1 | 29-05-2014<br>24-09-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140147607 A1